# EUROPÄISCHE PATENTSCHRIFT

(11) **EP 2 935 465 B1**
(45) Veröffentlichungstag und Bekanntmachung des Hinweises auf die Patenterteilung: **01.08.2018**
(21) Anmeldenummer: 13805778.1
(22) Anmeldetag: 09.12.2013
(51) Int. Cl.: C09C 1/00, C09D 11/037, C09D 17/00, C09D 7/12

(54) **PIGMENTE**
PIGMENTS
PIGMENT

(30) Priorität: 20.12.2012 DE 102012024901
(43) Veröffentlichungstag der Anmeldung: 28.10.2015
(73) Patentinhaber: Merck Patent GmbH, 64293 Darmstadt (DE)
(72) Erfinder: SCHMIDT, Christoph, 65830 Kriftel (DE)
(86) Internationale Anmeldenummer: PCT/EP2013/003702
(87) Internationale Veröffentlichungsnummer: WO 2014/094993

(56) Entgegenhaltungen:
- EP-A1- 2 607 432
- WO-A1-2009/062886
- US-A- 1 533 430
- US-A1- 2011 269 845

## Beschreibung

Die vorliegende Erfindung betrifft Interferenzpigmente auf der Basis von mehrfach beschichteten plättchenförmigen Substraten.

Glanz- oder Effektpigmente werden in vielen Bereichen der Technik eingesetzt, insbesondere im Bereich der Autolacke, der dekorativen Beschichtung, im Kunststoff, in Farben, Druckfarben sowie in kosmetischen Formulierungen.

Interferenzpigmente basieren auf plättchenförmigen Partikeln mit einer inneren Schichtstruktur. Die Dicken der Schichten liegen in der Größenordnung des sichtbaren Lichtes, so dass an den Schichten Interferenzerscheinungen auftreten, die den intensiven Glanz bzw. die Farben hervorrufen. Die Pigmentpartikel bestehen in der Regel aus einem plättchenförmigen zentralen Träger, der mit einer oder mehreren Oxidschichten belegt ist. Die Belegung mit mehreren Oxidschichten führt zu sogenannten Mehrschichtpigmenten, die sich durch besondere Effekte, wie z.B. besonders hohe Winkelabhängigkeit des Farbtones und/oder intensive Farben auszeichnen.

Typische Mehrschichtpigmente dieser Art bestehen aus einer alternierenden Abfolge von Oxiden mit unterschiedlichen Brechzahlen, die auf das Substrat aufgebracht sind.

Als Beispiele seien hier die in der US 2011/0269845 A1, WO 2009/062886 A1, EP 2 607 432 A1, WO 98/53011 und WO 99/20695 beschriebenen Produkte genannt. Eine spezielle Ausführungsform mit einer SnO₂-Zwischenschicht wird in der CN101289580 A beschrieben. Darin wird die Herstellung eines goldfarbenen Interferenzpigmentes durch Belegung von Glimmer mit vier aufeinander folgenden Schichten von TiO₂, TiO₂/Fe₂O₃, SnO₂ und TiO₂ beschrieben.

Die aus der CN101289580 A bekannten Goldpigmente auf der Basis von Glimmerplättchen haben aber den Nachteil, dass sie eine verhältnismäßig niedrige Farbintensität C* für ein Mehrschichtpigment aufweisen.

Aufgabe der vorliegenden Erfindung ist es daher farbstarke Interferenzpigmente mit hoher Farbintensität und einem hohen Glanz bereit zu stellen, die sich durch ihre vorteilhaften Anwendungseigenschaften auszeichnen und gleichzeitig auf einfache Art und Weise hergestellt werden können.

Es wurden nun überraschend Interferenzpigmente auf der Basis plättchenförmiger Substrate mit mindestens zwei im sichtbaren Wellenlängenbereich absorbierenden Schichten gefunden, deren Farbintensität (Buntheit) deutlich über den aus dem Stand der Technik bekannten Pigmente vom Interferenztyp hinausgeht.

Gegenstand der vorliegenden Erfindung sind Interferenzpigmente gemäß Anspruch 1 auf der Basis von mehrfach beschichteten plättchenförmigen Substraten, die auf der Oberfläche des Substrats eine Schichtenfolge aus
(A0) optional einer hochbrechenden Beschichtung bestehend aus einer Schicht aus TiO₂,
(A) einer hochbrechenden Beschichtung bestehend aus einem Gemisch aus TiO₂ und Fe₂O₃, die gegebenenfalls mit ein oder mehreren weiteren Oxiden dotiert sein kann,
(B) einer hochbrechenden Schicht bestehend aus SnO₂,
(C) einer hochbrechenden im sichtbaren Wellenlängenbereich absorbierende Beschichtung,
und optional
(D) einer äußeren Schutzschicht
aufweisen.

Die erfindungsgemäßen Mehrschichtpigmente zeichnen sich gegenüber den Interferenzpigmenten aus dem Stand der Technik durch eine höhere Farbstärke aus und zeigen intensive und brillante Farben, insbesondere im Gold- und Rotbereich.

Die Farbstärke der erfindungsgemäßen Pigmente ist dabei u.a. abhängig von der Korngrößenverteilung. Je kleiner die Korngröße, desto deckender ist das erfindungsgemäße Pigment in der jeweiligen Applikation, beispielsweise in einem Autolack, und desto höher ist die Farbstärke.

Die erfindungsgemäßen Pigmente sind den Mehrschichtpigmenten aus dem Stand der Technik nicht nur hinsichtlich ihrer optischen Eigenschaften, wie Glanz und Farbstärke, sondern auch in ihren anwendungstechnischen Eigenschaften, wie z. B. der mechanischen Stabilität und der Photostabilität, deutlich überlegen.

Gegenstand der Erfindung ist weiterhin die Verwendung der erfindungsgemäßen Pigmente in Farben, Lacken, insbesondere Autolacken, Autoreparaturlacken, Pulverlacken, Druckfarben, Sicherheitsdruckfarben, Kunststoffen, keramischen Materialien, Gläsern, Papier, in Tonern für elektro-photographische Druckverfahren, im Saatgut, in Gewächshausfolien und Zeltplanen, als Absorber bei der Lasermarkierung von Papier und Kunst-stoffen, in kosmetischen Formulierungen. Weiterhin sind die erfindungsgemäßen Pigmente auch zur Herstellung von Pigmentanteigungen mit Wasser, organischen und/oder wässrigen Lösemitteln, Pigment-präparationen sowie zur Herstellung von Trockenpräparaten, wie z. B. Granulaten, Chips, Pellets, Briketts, etc., geeignet. Die Trockenpräparate sind insbesondere für Druckfarben und in der Kosmetik geeignet.

Geeignete Basissubstrate für die erfindungsgemäßen Pigmente sind farblose oder selektiv oder nicht selektiv absorbierende plättchenförmige Substrate. Geeignete Substrate sind Schichtsilikate wie natürlicher oder synthetischer Glimmer, Aluminiumoxid-, Glas-, SiO₂- oder TiO₂- Plättchen.

### Besonders bevorzugte Substrate sind

Glasplättchen, natürliche oder synthetische Glimmerplättchen und Al₂O₃-Plättchen.

Die Größe der Basissubstrate ist an sich nicht kritisch und kann auf den jeweiligen Anwendungszweck abgestimmt werden. In der Regel haben die plättchenförmigen Substrate eine Dicke zwischen 0,005 und 10 µm, insbesondere zwischen 0,05 und 1 µm. Die Ausdehnung in den beiden anderen Bereichen beträgt üblicherweise 1-500 µm, vorzugsweise 2-300 µm und insbesondere 20-200 µm. Bevorzugte kleinere Partikelgrößen sind weiterhin solche im Bereich von 1-100 µm, insbesondere 5-60 µm, 5-40 µm und 1-15 µm.

Geeignete Basissubstrate sind aufgrund ihrer glatten Oberflächen insbesondere synthetisch hergestellte Substrate. Besonders bevorzugte synthetische Substrate sind Glasplättchen, Glimmerplättchen, SiO₂-Plättchen und Al₂O₃-Plättchen. Insbesondere bevorzugt sind Al₂O₃-Plättchen.

Geeignete Gläser für die synthetisch hergestellten Glasplättchen sind alle dem Fachmann bekannten Gläser, beispielsweise Silikatgläser, wie Kalknatronglas, Borosilikatglas, Aluminosilikatglas, Bleikristallglas, E-, A-, C-, ECR-Glas, Duranglas, Fensterglas, Laborglas, etc. Derartige Gläser werden aus Sand, Kalk, Tonerde, Borverbindungen, Pottasche, Soda, usw. erschmolzen und in einem geformten Zustand erstarren gelassen. Geeignete Glasplättchen bestehen vorzugsweise aus C-, E-, ECR- oder Borosilikatglas. Es können selbstverständlich auch Gemische von verschiedenen Glasplättchen eingesetzt werden, die sich nur in der Glaszusammensetzung unterscheiden. Insbesondere bevorzugt sind Substratplättchen aus Calcium-Aluminiumborosilikat oder ECR-Glas.

Durch den Zusatz von anorganischen Farbmitteln können die Glasplättchen bei der Herstellung gezielt eingefärbt werden. Geeignete Farbmittel sind solche, die bei der Schmelztemperatur des Glases sich nicht zersetzen. Das Farbmittel wird in der Regel in Mengen von 0,1 - 50 Gew.-%, insbesondere von 0,2 - 25 Gew.-% und ganz besonders bevorzugt von 0,5 - 10 Gew.-%, der Glasschmelze zugesetzt.

Geeignete Färbemittel sind insbesondere die Kationen oder komplexe Anionen der Elemente Cu, Cr, Mn, Fe und Co und/oder deren Kombinationen. Durch den Zusatz der Ionen können intensive Blau-, Grün-, Gelb-, Orange- oder Rotfärbungen erhalten werden. Geeignete Färbemittel sind weiterhin TiO₂ oder elementare Edelmetalle.

Der Brechungsindex geeigneter Glasplättchen liegt vorzugsweise bei 1,45-1,80, insbesondere bei 1,50-1,70.

Häufig empfiehlt es sich die Oberfläche der Glasplättchen vor der Belegung mit den Schichten (A0)-(C) bzw. (A)-(C) mit einer SiO₂-Schicht zu versehen. Die chemische Zusammensetzung der Glasplättchen ist aufgrund der Belegung mit der SiO₂-Schicht (Schicht (S)) allerdings von untergeordneter Bedeutung für die weiteren Beschichtungen und die resultierenden anwendungstechnischen Eigenschaften der Pigmente. Durch die SiO₂-Belegung wird die Glasoberfläche vor chemischer Veränderung wie Quellung, Auslaugen von Glasbestandteilen oder Auflösung in den aggressiven sauren Belegungslösungen geschützt.

Besonders bevorzugt sind Glasplättchen mit einer durchschnittlichen Dicke von < 2 µm. Dickere Plättchen können in den gängigen Druckverfahren und bei anspruchsvollen Lackierungen in der Regel nicht eingesetzt werden. Vorzugsweise besitzen die Glasplättchen mittlere Dicken von < 1 µm, insbesondere von < 0,9 µm. Insbesondere bevorzugt sind Glasplättchen mit Dicken von 200-1000 nm. Der Durchmesser der Glasplättchen liegt vorzugsweise bei 5-300 µm, insbesondere bevorzugt bei 20 - 200 µm, 10 - 150 µm und 10 - 100 µm. Glasplättchen mit diesen Dimensionen sind kommerziell im Handel erhältlich.

Besonders bevorzugt sind Interferenzpigmente auf der Basis von Al₂O₃-Plättchen. Vorzugsweise besitzen die Al₂O₃-Plättchen folgende Korngrößenverteilungen:

| | |
|---|---|
| D₁₀: | 6-12 |
| D₅₀: | 15-23 |
| D₉₀: | 28-45. |

Die Dicke der Al₂O₃-Plättchen beträgt vorzugsweise 50-500 nm. Der Formfaktor (Verhältnis Durchmesser/Dicke) der Al₂O₃-Plättchen ist vorzugsweise 50-300.

Die Charakterisierung der Teilchengrößenverteilung findet in dieser Patentanmeldung mittels Laserbeugung statt. In der vorliegenden Anmeldung wird die Teilchengrößenverteilung mit dem Gerät Malvern Mastersizer 2000 bestimmt.

Die Dicke der einzelnen Schichten mit hohem Brechungsindex, z.B. TiO₂, SnO₂, Fe₂O₃, Pseudobrookit, TiO₂/Fe₂O₃ auf dem Basissubstrat ist wesentlich für die optischen Eigenschaften des Pigments. Für ein Pigment mit intensiven Interferenzfarben muss die Dicke der einzelnen Schichten genau aufeinander eingestellt werden. Es hat sich gezeigt, dass die Summe aller Schichten auf dem Substrat eine Dicke von ≤ 300 nm, vorzugsweise ≤ 250 nm nicht übersteigen sollte.

Die erfindungsgemäßen Interferenzpigmente enthalten mindestens drei hochbrechende Schichten (A)-(C). Sofern die genannten Substrate mit der Schicht (A0) belegt sind, besitzen die erfindungsgemäßen Interferenzpigmente vier hochbrechende Schichten. Auf der Oberfläche des Substrats befindet sich somit entweder die Schicht (A0) bzw. die Schicht (A) als erste Schicht.

Die hochbrechende Schicht (A0) hat einen Brechungsindex n ≥ 2,0, vorzugsweise n ≥ 2,1 und ist eine TiO₂-Schicht. Die Dicke der Beschichtung (A0) beträgt vorzugsweise 1 - 100 nm, insbesondere 1 - 50 nm und ganz besonders bevorzugt 1 - 30 nm.

Die Schicht (A) besteht aus einem Gemisch aus TiO₂ und Fe₂O₃. Das Mischungsverhältnis TiO₂ zu Fe₂O₃ beträgt 10:1 bis 1:3, insbesondere 3:1 bis 1:3. Die Dicke der Beschichtung (A) beträgt vorzugsweise 10 - 200 nm, insbesondere 15 - 180 nm und ganz besonders bevorzugt 20 - 150 nm.

Häufig empfiehlt es sich zur Erhöhung der Farbstärke der Schicht (A) und/oder der Schicht (C) dem TiO₂/Fe₂O₃-Gemisch noch ein oder mehrere Oxide, wie z.B. Al₂O₃, Ce₂O₃, B₂O₃, ZrO₂, SnO₂, zuzumischen. Der Gew.-%-Anteil der weiteren Oxide neben dem Fe₂O₃/TiO₂-Gemisch sollte in der Schicht (A) bzw. Schicht (C) nicht mehr als 20 Gew.-%, vorzugsweise nicht mehr als 10 Gew.-%, betragen. Vorzugsweise wird ein Metalloxid zugemischt, wie z.B. Al₂O₃, ZrO₂ oder SnO₂.

Die Schicht (B) besteht aus SnO₂ und besitzt vorzugsweise Schichtdicken von 0,5-50 nm, insbesondere 1-30 nm und ganz besonders bevorzugt von 5-25 nm.

Die hochbrechende Beschichtung (C) hat einen Brechungsindex n ≥ 2,0, vorzugsweise n ≥ 2,1 und kann aus einer oder mehreren Schichten bestehen. Bei der Beschichtung (C) handelt es sich um
- eine TiO₂-Schicht gefolgt von einer Fe₂O₃-Schicht, oder
- eine Fe₂O₃-Schicht, oder
- eine Schicht bestehend aus einem Gemisch aus TiO₂ und Fe₂O₃ oder
- eine TiO₂-Schicht gefolgt von einer Schicht aus Carminrot oder
- eine TiO₂-Schicht gefolgt von einer Schicht aus Berliner Blau.

Sofern es sich um ein Gemisch aus TiO₂ und Fe₂O₃ handelt, beträgt das Mischungsverhältnis TiO₂ zu Fe₂O₃ vorzugsweise 10:1 bis 1:3, insbesondere 3:1 bis 1:3 beträgt. Die Dicke der Beschichtung (C) beträgt vorzugsweise 10 - 200 nm, insbesondere 15 - 180 nm und ganz besonders bevorzugt 20 - 150 nm.

Das Titandioxid kann in der hochbrechenden Schicht (A0) oder sofern vorhanden in der Beschichtung (C) in der Rutil- oder in der Anatasmodifikation vorliegen. Die Verfahren zur Herstellung von Rutil sind im Stand der Technik beispielsweise beschrieben in der U.S. 5,433,779, U.S. 4,038,099, U.S. 6,626,989, DE 25 22 572 C2, EP 0 271 767 B1. Vorzugsweise wird vor der TiO₂-Auffällung auf beschichtete oder unbeschichtete Substratplättchen eine dünne Zinndioxidschicht (< 10 nm) aufgebracht, die als Additiv dient um das TiO₂ als Rutilphase zu erhalten.

Die Dicke der Schichten (A0) bis (C) bzw. (A) bis (C) richtet sich nach der gewünschten Interferenzfarbe.

Besonders bevorzugte Interferenzpigmente besitzen folgende Schichtenfolgen auf dem plättchenförmigen Substrat:
Substrat + TiO₂ + TiO₂/Fe₂O₃ + SnO₂ + TiO₂/Fe₂O₃
Substrat + TiO₂ + TiO₂/Fe₂O₃ + SnO₂ + TiO₂ + TiO₂/Fe₂O₃
Substrat + TiO₂ + TiO₂/Fe₂O₃ + SnO₂ + TiO₂ + Fe₂O₃
Substrat + TiO₂ + TiO₂/Fe₂O₃ + SnO₂ + Fe₂O₃
Substrat + TiO₂ + TiO₂/Fe₂O₃ + SnO₂ + Fe₃O₄
Substrat + TiO₂ + TiO₂/Fe₂O₃ + SnO₂ + TiO₂ + Karminrot
Substrat + TiO₂ + TiO₂/Fe₂O₃ + SnO₂ + TiO₂ + Berliner Blau
Substrat + TiO₂/Fe₂O₃ + SnO₂ + TiO₂/Fe₂O₃
Substrat + TiO₂/Fe₂O₃ + SnO₂ + TiO₂ + TiO₂/Fe₂O₃
Substrat + TiO₂/Fe₂O₃ + SnO₂ + TiO₂ + Fe₂O₃
Substrat + TiO₂/Fe₂O₃ + SnO₂ + Fe₂O₃
Substrat + TiO₂/Fe₂O₃ + SnO₂ + Fe₃O₄
Substrat + TiO₂/Fe₂O₃ + SnO₂ + TiO₂ + Karminrot
Substrat + TiO₂/Fe₂O₃ + SnO₂ + TiO₂ + Berliner Blau.

Die oben genannten bevorzugten Interferenzpigmente können optional als finale Schicht jeweils noch eine Schutzschicht (D) aufweisen.

Ganz besonders bevorzugt sind Interferenzpigmente mit der folgenden Schichtenfolge:
Substrat + TiO₂/Fe₂O₃ + SnO₂ + TiO₂/Fe₂O₃ + optional Schicht (D)
Substrat + TiO₂ + TiO₂/Fe₂O₃ + SnO₂ + TiO₂/Fe₂O₃ + optional Schicht (D)

Der Ausdruck "TiO₂/Fe₂O₃" bedeutet, dass hier TiO₂ und Fe₂O₃ gemischt aufgebracht werden. Das Mischungsverhältnis TiO₂ zu Fe₂O₃ beträgt vorzugsweise 10:1 bis 1:3, insbesondere 3:1 bis 1:3.

Sofern sowohl die Schicht (A) als auch die Beschichtung (C) jeweils aus einem Gemisch von TiO₂ und Fe₂O₃ bestehen, kann die Zusammensetzung des TiO₂/Fe₂O₃-Gemisches gleich oder verschieden sein.

Unter den bevorzugten Mehrschichtpigmenten sind die Pigmente basierend auf Al₂O₃-Plättchen, ferner auf Glasplättchen, besonders bevorzugt. Ganz besonders bevorzugte Mehrschichtpigmente der vorliegenden Erfindung werden nachfolgend genannt:
synthetische Glimmerplättchen + TiO₂ + TiO₂/Fe₂O₃ + SnO₂ + TiO₂/Fe₂O₃
synthetische Glimmerplättchen + TiO₂ + TiO₂/Fe₂O₃ + SnO₂ + TiO₂ + TiO₂/Fe₂O₃
synthetische Glimmerplättchen + TiO₂ + TiO₂/Fe₂O₃ + SnO₂ + TiO₂ + Fe₂O₃
synthetische Glimmerplättchen + TiO₂ + TiO₂/Fe₂O₃ + SnO₂ + Fe₂O₃
synthetische Glimmerplättchen + TiO₂/Fe₂O₃ + SnO₂ + TiO₂/Fe₂O₃
synthetische Glimmerplättchen + TiO₂/Fe₂O₃ + SnO₂ + TiO₂ + TiO₂/Fe₂O₃
synthetische Glimmerplättchen + TiO₂/Fe₂O₃ + SnO₂ + TiO₂ + Fe₂O₃
synthetische Glimmerplättchen + TiO₂/Fe₂O₃ + SnO₂ + Fe₂O₃
Glasplättchen + TiO₂ + TiO₂/Fe₂O₃ + SnO₂ + TiO₂/Fe₂O₃
Glasplättchen + TiO₂ + TiO₂/Fe₂O₃ + SnO₂ + TiO₂ + TiO₂/Fe₂O₃
Glasplättchen + TiO₂ + TiO₂/Fe₂O₃ + SnO₂ + TiO₂ + Fe₂O₃
Glasplättchen + TiO₂ + TiO₂/Fe₂O₃ + SnO₂ + Fe₂O₃
Glasplättchen + TiO₂/Fe₂O₃ + SnO₂ + TiO₂/Fe₂O₃
Glasplättchen + TiO₂/Fe₂O₃ + SnO₂ + TiO₂ + TiO₂/Fe₂O₃
Glasplättchen + TiO₂/Fe₂O₃ + SnO₂ + TiO₂ + Fe₂O₃
Glasplättchen + TiO₂/Fe₂O₃ + SnO₂ + Fe₂O₃
Glasplättchen + SiO₂ + TiO₂ + TiO₂/Fe₂O₃ + SnO₂ + TiO₂/Fe₂O₃
Glasplättchen + SiO₂ + TiO₂ + TiO₂/Fe₂O₃ + SnO₂ + TiO₂ + TiO₂/Fe₂O₃
Glasplättchen + SiO₂ + TiO₂ + TiO₂/Fe₂O₃ + SnO₂ + TiO₂ + Fe₂O₃
Glasplättchen + SiO₂ + TiO₂ + TiO₂/Fe₂O₃ + SnO₂ + Fe₂O₃
Glasplättchen + SiO₂ + TiO₂/Fe₂O₃ + SnO₂ + TiO₂/Fe₂O₃
Glasplättchen + SiO₂ + TiO₂/Fe₂O₃ + SnO₂ + TiO₂ + TiO₂/Fe₂O₃
Glasplättchen + SiO₂ + TiO₂/Fe₂O₃ + SnO₂ + TiO₂ + Fe₂O₃
Glasplättchen + SiO₂ + TiO₂/Fe₂O₃ + SnO₂ + Fe₂O₃
Al₂O₃-Plättchen + TiO₂ + TiO₂/Fe₂O₃ + SnO₂ + TiO₂/Fe₂O₃
Al₂O₃-Plättchen + TiO₂ + TiO₂/Fe₂O₃ + SnO₂ + TiO₂ + TiO₂/Fe₂O₃
Al₂O₃-Plättchen + TiO₂ + TiO₂/Fe₂O₃ + SnO₂ + TiO₂ + Fe₂O₃
Al₂O₃-Plättchen + TiO₂ + TiO₂/Fe₂O₃ + SnO₂ + Fe₂O₃
Al₂O₃-Plättchen + TiO₂/Fe₂O₃ + SnO₂ + TiO₂/Fe₂O₃
Al₂O₃-Plättchen + TiO₂/Fe₂O₃ + SnO₂ + TiO₂ + TiO₂/Fe₂O₃
Al₂O₃-Plättchen + TiO₂/Fe₂O₃ + SnO₂ + TiO₂ + Fe₂O₃
Al₂O₃-Plättchen + TiO₂/Fe₂O₃ + SnO₂ + Fe₂O₃
Al₂O₃-Plättchen + TiO₂ + TiO₂/Fe₂O₃ + SnO₂ + TiO₂/Fe₂O₃
SiO₂-Plättchen + TiO₂ + TiO₂/Fe₂O₃ + SnO₂ + TiO₂ + TiO₂/Fe₂O₃
SiO₂-Plättchen + TiO₂ + TiO₂/Fe₂O₃ + SnO₂ + TiO₂ + Fe₂O₃
SiO₂-Plättchen + TiO₂ + TiO₂/Fe₂O₃ + SnO₂ + Fe₂O₃
SiO₂-Plättchen + TiO₂/Fe₂O₃ + SnO₂ + TiO₂/Fe₂O₃
SiO₂-Plättchen + TiO₂/Fe₂O₃ + SnO₂ + TiO₂ + TiO₂/Fe₂O₃
SiO₂-Plättchen + TiO₂/Fe₂O₃ + SnO₂ + TiO₂ + Fe₂O₃
SiO₂-Plättchen + TiO₂/Fe₂O₃ + SnO₂ + Fe₂O₃.

Anstelle der oben genannten synthetischen Substrate können auch plättchenförmige Substrate natürlichen Ursprungs, wie z.B. Plättchen von natürlichem Glimmer, eingesetzt werden. Bevorzugte Mehrschichtpigmente, beispielsweise auf natürlichem Glimmer, besitzen vorzugsweise den folgenden Schichtaufbau:
natürliche Glimmerplättchen + TiO₂ + TiO₂/Fe₂O₃ + SnO₂ + TiO₂/Fe₂O₃
natürliche Glimmerplättchen + TiO₂ + TiO₂/Fe₂O₃ + SnO₂ + TiO₂ + TiO₂/Fe₂O₃
natürliche Glimmerplättchen + TiO₂ + TiO₂/Fe₂O₃ + SnO₂ + TiO₂ + Fe₂O₃
natürliche Glimmerplättchen + TiO₂ + TiO₂/Fe₂O₃ + SnO₂ + Fe₂O₃
natürliche Glimmerplättchen + TiO₂/Fe₂O₃ + SnO₂ + TiO₂/Fe₂O₃
natürliche Glimmerplättchen + TiO₂/Fe₂O₃ + SnO₂ + TiO₂ + TiO₂/Fe₂O₃
natürliche Glimmerplättchen + TiO₂/Fe₂O₃ + SnO₂ + TiO₂ + Fe₂O₃
natürliche Glimmerplättchen + TiO₂/Fe₂O₃ + SnO₂ + Fe₂O₃
natürliche Glimmerplättchen + TiO₂ + TiO₂/Fe₂O₃ + SnO₂ + TiO₂ + Karminrot
natürliche Glimmerplättchen + TiO₂ + TiO₂/Fe₂O₃ + SnO₂ + TiO₂ + Berliner Blau.

Die oben genannten bevorzugten Mehrschichtpigmente können optional als finale Schicht jeweils noch eine Schutzschicht (D) aufweisen.

Unter hochbrechenden Beschichtungen sind in dieser Anmeldung Schichten mit einem Brechungsindex von ≥ 1,8, unter niedrigbrechenden Schichten solche mit n < 1,8 zu verstehen.

Die erfindungsgemäßen Mehrschichtpigmente lassen sich in der Regel relativ leicht herstellen.

Bei der Nassbeschichtung werden die Substratplättchen in Wasser suspendiert, ggf. mit einer Wasserglaslösung, und dann mit ein oder mehreren hydrolysierbaren Metallsalzen bei einem für die Hydrolyse geeigneten pH-Wert versetzt, der so gewählt wird, dass das SiO₂, sofern vorhanden, vorzugsweise bei der Belegung von Glasplättchen, und die bzw. das Metalloxid(e) bzw. Metalloxidhydrat(e) gleichzeitig oder nacheinander, direkt auf das Plättchen ausgefällt werden, ohne dass es zu Nebenfällungen kommt. Der pH-Wert wird üblicherweise durch gleichzeitiges Zudosieren einer Base und/oder Säure konstant gehalten. Anschließend werden die Pigmente abgetrennt, gewaschen und bei 50-150 °C für 6-18 h getrocknet und gegebenenfalls 0,5-3 h geglüht, wobei die Glühtemperatur im Hinblick auf die jeweils vorliegende Beschichtung optimiert werden kann. In der Regel liegen die Glühtemperaturen im Bereich von 600 -1100 C, vorzugsweise 700 - 1000 °C. Bei der Verwendung von Glasplättchen als Substrat liegt die Glühtemperatur vorzugsweise im Bereich von 500 - 800 °C. Zuletzt wird das Pigment gesiebt. Falls gewünscht, können die Pigmente nach Aufbringen einzelner Beschichtungen abgetrennt, getrocknet und ggf. geglüht werden, um dann zur Auffällung der weiteren Schichten wieder resuspendiert zu werden.

Bei der Aufbringung einer temperaturempfindlichen Schicht, z.B. aus Karminrot oder Berliner Blau, wird in der Regel auf eine abschließende Glühung verzichtet. In diesem Falle kann es vorteilhaft sein, das Mehrschichtpigment vor Aufbringung der temperaturempfindlichen Schicht aufzuarbeiten und zu glühen um es dann in einem separaten Belegungsprozess mit der temperaturempfindlichen Schicht zu belegen.

Neben der wässrigen Belegung kann die Beschichtung der Substrate auch in einem Wirbelbettreaktor durch Gasphasenbeschichtung erfolgen, wobei z. B. die in EP 0 045 851 und EP 0 106 235 zur Herstellung von Perlglanzpigmenten vorgeschlagenen Verfahren entsprechend angewendet werden können.

Bevorzugt sind Mehrschichtpigmente mit einem Gold- oder Rot-Farbton, der in sehr weiten Grenzen durch die unterschiedliche Wahl der Belegungsmengen bzw. der daraus resultierenden Schichtdicken variiert werden kann. Die Feinabstimmung für einen bestimmten Farbton kann über die reine Mengenwahl hinaus durch visuell oder messtechnisch kontrolliertes Anfahren der gewünschten Farbe erreicht werden.

Zur Erhöhung der Licht-, Wasser- und Wetterstabilität empfiehlt es sich häufig, in Abhängigkeit vom Einsatzgebiet, das fertige Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung/ Nachbehandlung (Schicht D) wird die chemische und photochemische Stabilität weiter erhöht oder die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendermedien können beispielsweise funktionelle Beschichtungen aus Al₂O₃ oder ZrO₂ oder deren Gemische auf die Pigmentoberfläche aufgebracht werden. Weiterhin sind organische Nachbeschichtungen möglich, z.B. mit Silanen, wie beispielsweise beschrieben in der EP 0090259, EP 0 634 459, WO 99/57204, WO 96/32446, WO 99/57204, U.S. 5,759,255, U.S. 5,571,851, WO 01/92425 oder in J.J. Ponjeé, Philips Technical Review, Vol. 44, No. 3, 81 ff. und P.H. Harding J.C. Berg, J. Adhesion Sci. Technol. Vol. 11 No. 4, S. 471-493. Die Schicht (D) weist vorzugsweise Dicken von 0,1 - 100 nm, insbesondere von 0,1 - 50 nm und ganz besonders bevorzugt von 0,1 - 30 nm auf.

In einer bevorzugten Ausführungsform besteht die Schicht (D) aus einer SiO₂-Schicht. Diese Schicht kann sowohl kalziniert als auch nicht kalziniert sein. Vorzugsweise handelt es sich um eine kalzinierte SiO₂-Schicht.

Da die erfindungsgemäßen Mehrschichtpigmente einen starken Glanz mit intensiven Interferenzfarben und einer ansprechenden Pulverfarbe verbinden, lassen sich mit ihnen besonders wirksame Effekte in den verschiedenen Anwendungsmedien erzielen, z. B. in kosmetischen Formulierungen, wie z. B. Nagellacken, Lippenstiften, Presspudern, Gelen, Lotionen, Seifen, Zahnpasten, in Lacken wie z.B. Autolacken, Industrielacken und Pulverlacken sowie in Druckfarben, Saatguteinfärbungen, Kunststoffen und in der Keramik.

Die Konzentration des erfindungsgemäßen Pigments im zu pigmentierenden Anwendungssystem liegt in der Regel zwischen 0,1 und 100 Gew.-%, vorzugsweise zwischen 0,1 und 70 Gew.-% und insbesondere zwischen 0,5 und 10 Gew.-%, bezogen auf den Gesamtfestkörpergehalt des Systems. Sie ist in der Regel abhängig vom konkreten Anwendungsfall.

Es versteht sich von selbst, dass für die verschiedenen Anwendungszwecke die erfindungsgemäßen Mehrschichtpigmente auch vorteilhaft in Abmischung mit einem oder mehreren Farbmitteln, z.B. Effektpigmenten ausgewählt aus der Gruppe der Perlglanzpigmente, Interferenzpigmente, goniochromatischen Pigmente, BiOCI-Plättchen, Mehrschichtpigmente, Metallpigmente, Glanzpigmenten, und/oder organischen Farbstoffen, und/oder organischen Farbpigmenten und anderen Pigmenten, wie z.B. transparenten und deckenden Weiß-, Bunt- und Schwarzpigmenten sowie mit plättchenförmigen Eisenoxiden, holographischen Pigmenten, LCPs (Liquid Crystal Polymers) und herkömmlichen transparenten, bunten und schwarzen Glanzpigmenten auf der Basis von metalloxidbeschichteten Glimmer- und SiO₂-Plättchen, etc., verwendet werden können. Die erfindungsgemäßen Mehrschichtpigmente können in jedem Verhältnis mit einem Farbmittel gemischt werden. Das Gewichtsverhältnis des erfindungsgemäßen Mehrschichtpigments zu Farbmittel kann je nach Farbausprägung 1 : 99 zu 99 : 1 sein.

Als Farbmittel kommen vor allem Perlglanzpigmente insbesondere auf Basis von natürlichem oder synthetischem Glimmer, SiO₂-Plättchen, Fe₂O₃-Plättchen, Glasplättchen oder Al₂O₃-Plättchen, die mit einer oder mehreren Metalloxidschichten umhüllt sind, Metalleffektpigmente (Al-Plättchen, Bronzen), optisch variable Pigmente (OVP's), Flüssigkristallpolymerpigmente (LCP's) oder holographische Pigmente in Frage.

Neben den Effektpigmenten als Zumischung kommen insbesondere auch vorwiegend nicht glänzende, konventionelle Farbmittel in Frage, wie z.B. TiO₂, eingefärbtes SiO₂, CaSO₄, Eisenoxide, Chromoxide, Ruß, organische Farbpigmente, wie z.B. Anthrachinon-Pigmente, Chinacridon-Pigmente, Diketopyrrolo-pyrrol-Pigmente, Phthalocyanin-Pigmente, Azopigmente, Isoindolin-Pigmente. Weiterhin geeignet sind beispielsweise BiOCl-Pigmente, eingefärbte Glasfasern, α-FeOOH, organische Farbpigmente, wie z.B. Azopigmente, β-Phthalocyanin Cl Blue 15,3, Cromophtalgelb 8GN (Ciba-Geigy), Irgalith Blau PD56 (BASF), Azomethinkupferkomplex Cl Yellow 129, Irgazingelb 5GT (BASF) oder ein Gemisch der genannten Farbmittel. Die Farbmittel können dabei sowohl natürlichen als auch synthetischen Ursprungs sein.

Die erfindungsgemäßen Mehrschichtpigmente können selbstverständlich auch mit Füllstoffen in jedem Gewichtsverhältnis miteinander abgemischt werden bzw. eingesetzt werden. Als Füllstoffe sind z. B. zu nennen synthetische organische Polymere, Polymethylmethacrylat, Methylmethacrylat Cross-Polymer, natürlicher und synthetischer Glimmer, Nylon-Pulver, reine oder gefüllte Melaminharze, Talkum, SiO₂, Glaspulver, Glaskugeln, Kaolin, Oxide oder Hydroxide von Aluminium, Magnesium, Calcium, Zink, BiOCl, Bariumsulfat, Calciumsulfat, Calciumcarbonat, Magnesiumcarbonat, basische Erdalkalicarbonate, wie z.B. Calcium- oder Magnesiumcarbonat, Kohlenstoff, sowie physikalische oder chemische Kombinationen dieser Stoffe. Bezüglich der Partikelform der Füllstoffe gibt es keine Einschränkungen. Sie kann den Anforderungen gemäß z. B. unregelmäßig, plättchenförmig, sphärisch oder nadelförmig sein.

Ebenso können feinteilige, insbesondere nanoskalige, Dielektrika, insbesondere in kosmetischen Formulierungen zur Verbesserung des Hautgefühls, den Mehrschichtpigmenten beigemischt werden. Beispiele für derartige Beimischungen sind Al₂O₃, SiO₂, ZnO oder TiO₂, die üblicherweise in Mengen von 0,01 - 15 Gew.-% der Formulierung zugegeben werden.

Die erfindungsgemäßen Mehrschichtpigmente sind mit einer Vielzahl von Farbsystemen kompatibel, vorzugsweise aus dem Bereich der Lacke, Farben und Druckfarben. Für die Herstellung der Druckfarben für z. B. den Tiefdruck, Flexodruck, Offsetdruck, Offsetüberdrucklackierung, ist eine Vielzahl von Bindern, insbesondere wasserlösliche Typen, geeignet, wie sie z. B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die erfindungsgemäßen Mehrschichtpigmente auch für die Lasermarkierung von Papier und Kunststoffen, sowie für Anwendungen im Agrarbereich, z. B. für Gewächshausfolien, sowie z. B. für die Farbgebung von Zeltplanen, geeignet.

Bei der Pigmentierung von Bindemittelsystemen z. B. für Farben und Druckfarben für den Tiefdruck, Offsetdruck oder Siebdruck, oder als Vorprodukt für Druckfarben, hat sich der Einsatz der erfindungsgemäßen Mehrschichtpigmente in Form von hochpigmentierten Pasten, Granulaten, Pellets, etc., als besonders geeignet erwiesen. Das erfindungsgemäße Pigment wird in der Regel in die Druckfarbe in Mengen von 2-35 Gew.-%, vorzugsweise 5-25 Gew.-%, und insbesondere 8-20 Gew.-% eingearbeitet. Offsetdruckfarben können die Pigmente mit einem Anteil von bis zu 40 Gew.% und mehr enthalten. Die Vorprodukte für die Druckfarben, z.B. in Granulatform, als Pellets, Briketts, etc., enthalten neben dem Bindemittel und den Additiven bis zu 98 Gew.% des erfindungsgemäßen Pigments. Druckfarben, die das erfindungsgemäße Mehrschichtpigment enthalten, zeigen in der Regel reinere Farbtöne als Druckfarben mit herkömmlichen Effektpigmenten.

Die erfindungsgemäßen Mehrschichtpigmente sind weiterhin geeignet zur Herstellung von fließfähigen Pigmentpräparationen und Trockenpräparaten, insbesondere für Druckfarben, enthaltend ein oder mehrere erfindungsgemäße Pigmente, Bindemittel und optional ein oder mehrere Additive.

In Kunststoffen enthaltend das erfindungsgemäße Mehrschichtpigment, vorzugsweise in Mengen von 0,01 bis 50 Gew.-%, insbesondere 0,1 bis 7 Gew.-%, lassen sich besonders ausgeprägte Farbeffekte erzielen.

Im Lackbereich, insbesondere im Automobillack, wird das Mehrschichtpigment, auch für 2- und 3-Schichtaufbauten in Mengen von 0,1-20 Gew.-%, vorzugsweise 1 bis 10 Gew.-%, eingesetzt. Typischerweise erfolgt die dekorative Lackierung von Autos in 2 Schichten: zunächst wird auf den Primer eine dekorative, d.h. die die farbbestimmenden Pigmente enthaltende Schicht aufgesprüht. Darauf erfolgt die Lackierung mit einer Klarlackschicht, wodurch die Farbigkeit verstärkt und der Glanz erhöht wird. Die Klarlackschicht trägt außerdem maßgeblich zur Wetterstabilität und Haltbarkeit der Lackierung bei.

Weiterhin kann das erfindungsgemäße Pigment zur Veredlung von Lebensmitteln, z. B. Masse-Einfärbung und/oder Überzüge von Bonbons, Weingummi, wie z.B. Gummibärchen, Pralinen, Lakritze, Konfekt, Zuckerstangen, Puddings, Brausegetränke, Limonaden, etc., oder als Überzug, z.B. bei Dragees und Tabletten im Pharmabereich, eingesetzt werden.

Das erfindungsgemäße Mehrschichtpigment kann auch vorteilhaft in der dekorativen und pflegenden Kosmetik eingesetzt werden. Die Einsatzkonzentration reicht von 0,01 Gew.-% im Shampoo bis zu 100 Gew. % bei losen Pudern. Bei einer Mischung der erfindungsgemäßen Pigmente mit Füllstoffen, vorzugsweise mit sphärischen Füllstoffen, wie z. B. SiO₂, kann die Konzentration bei 0,01-70 Gew.-% in der kosmetischen Formulierung liegen. Die kosmetischen Produkte, wie z.B. Nagellacke, Presspuder, Shampoos, lose Puder und Gele, zeichnen sich durch besonders interessante Farbeffekte und einen hohen Glanz aus.

Den Konzentrationen der erfindungsgemäßen Mehrschichtpigmente in der Formulierung sind keine Grenzen gesetzt. Sie können - je nach Anwendungsfall - zwischen 0,001 (rinse-off-Produkte, z.B. Duschgele) und 100 % (z.B. Glanzeffekt-Artikel für besondere Anwendungen) liegen.

Aufgrund des guten Skin Feelings und der sehr guten Hautadhäsion sind die erfindungsgemäßen Pigmente sowohl für Personal Care Applications, wie z. B. Body Lotions, Emulsionen, Shampoos, Seifen, etc., als auch insbesondere für die dekorative Kosmetik geeignet.

Selbstverständlich können die erfindungsgemäßen Mehrschichtpigmente in den Formulierungen auch mit jeder Art von Roh- und Hilfsstoffen sowie Wirkstoffen kombiniert werden. Dazu gehören u.a. Wasser, Alkohole, Polyole, polare und unpolare Öle, Fette, Wachse, Filmbildner, Polymere, Co-Polymere, Tenside, Radikalfänger, Antioxidantien, wie z.B. Vitamin C oder Vitamin E, Stabilisatoren, Geruchsverstärker, Silikonöle, Emulgatoren, Duftstoffe, Lösemittel wie z.B. Ethanol, Ethylacetat oder Butylacetat, Konservierungsmittel und allgemein anwendungstechnische Eigenschaften bestimmende Hilfsstoffe, wie z.B. Verdicker und rheologische Zusatzstoffe wie etwa Bentonite, Hektorite, Siliciumdioxide, Ca-Silicate, Gelatine, hochmolekulare Kohlenhydrate und/oder oberflächenaktive Hilfsmittel, etc.

Geeignete Wirkstoffe sind z.B. Insect Repellents, anorganische UV-Filter, wie z.B. TiO₂, UV A/BC-Schutzfilter (z.B. OMC, B3, MBC), auch in verkapselter Form, Anti-Ageing-Wirkstoffe, Vitamine und deren Derivate (z.B. Vitamin A, C, E, etc.), Selbstbräuner (z.B. DHA, Erytrolyse, u.a.) sowie weitere kosmetische Wirkstoffe, wie z.B. Bisabolol, LPO, VTA, Ectoin, Emblica, Allantoin, Bioflavanoide und deren Derivate.

Organische UV-Filter werden in der Regel in einer Menge von 0,5 bis 10 Gew.-%, vorzugsweise 1 bis 8 Gew.-%, anorganische Filter von 0,1 bis 30 Gew.-% in kosmetische Formulierungen eingearbeitet.

Die erfindungsgemäßen Mehrschichtpigmente können beispielsweise in Lippenstiften, Lipgloss, Rouge, Eyeliner, Lidschatten, (Volumen)Mascara, Nagellacke, Tagescremes, Nachtcremes, Körperlotionen, Reinigungsmilch, Körperpuder, Haargele, Haarmasken, Haarspülungen, Haarshampoos, Duschgelen, Duschölen, Badeölen, Sonnenschutz, Prä-Sun- und After-Sun-Präparate, Bräunungslotionen, Bräunungssprays, Make-ups, Lotions, Seifen, Badesalze, Zahnpasta, Gesichtsmasken, Presspuder, lose Puder und Gele, etc., verwendet werden. Die Herstellung derartiger Produkte erfolgt auf eine Weise, wie sie dem Fachmann auf diesem Gebiet bekannt ist.

Gegenstand der Erfindung sind insbesondere Formulierungen, die neben dem erfindungsgemäßen Mehrschichtpigment mindestens einen Bestandteil ausgewählt aus der Gruppe der Absorptionsmittel, Adstringenzien, antimikrobiellen Stoffen, Antioxidantien, Antiperspirantien, Antischaummitteln, Antischuppenwirkstoffen, Antistatika, Bindemitteln, biologischen Zusatzstoffen, Bleichmitteln, Chelatbildnern, Desodorierungsmitteln, Emollentien, Emulgatoren, Emulsionsstabilisatoren, Farbstoffen, Feuchthaltemitteln, Filmbildnern, Füllstoffen, Geruchsstoffen, Geschmacksstoffen, Insect Repellents, Konservierungsmitteln, Korrosionsschutzmitteln, kosmetischen Ölen, Lösungsmitteln, Oxidationsmitteln, pflanzlichen Bestandteilen, Puffersubstanzen, Reduktionsmitteln, Tensiden, Treibgasen, Trübungsmitteln, UV-Filtern und UV-Absorbern, Vergällungsmitteln, Viskositätsreglern, Parfüm und Vitaminen enthalten.

Gegenstand der Erfindung ist weiterhin auch die Verwendung der Pigmente in Formulierungen wie Farben, Lacken, Industrielacken, Coil Coating, Autolacken, Autoreparaturlacken, Pulverlacken, Druckfarben, Sicherheitsdruckfarben, Kunststoffen, keramischen Materialien, Gläsern, Papier, in Tonern für elektrophotographische Druckverfahren, im Saatgut, in Gewächshausfolien und Zeltplanen, als Absorber bei der Lasermarkierung von Papier und Kunststoffen, in kosmetischen Formulierungen, zur Herstellung von Pigmentanteigungen mit Wasser, organischen und/oder wässrigen Lösemitteln, zur Herstellung von Pigmentpräparationen und Trockenpräparaten, wie z. B. Granulate, Pellets, Chips, Briketts, zur Masseeinfärbung von Lebensmitteln, zur Einfärbung von Überzügen von Lebensmittelprodukten und Pharmaerzeugnissen, z.B. als Überzug bei Dragees und Tabletten.

Besonders bevorzugt ist der Einsatz der erfindungsgemäßen Mehrschichtpigmente in Oberflächenbeschichtungen, wie z.B. Autolacken, Autoreparaturlacken und Industrielacken, Pulverbeschichtungen, Coil Coating sowie in Druckfarben.

Die nachfolgenden Beispiele sollen die Erfindung näher erläutern ohne sie jedoch zu beschränken.

### Beispiele

### Beispiel 1: Al₂O₃-Plättchen + TiO₂/Fe₂O₃ + SnO₂ + TiO₂/Fe₂O₃)

100 g Al₂O₃-Plättchen der Teilchengröße 5-40 µm werden in 1,5 l entmineralisiertem Wasser auf 75 °C aufgeheizt. Nach Erreichen dieser Temperatur werden unter starkem Rühren 460 g einer Mischlösung von 167 g TiCl₄-Lösung (30 Gew.-% TiCl₄), 222 g FeCl₃-Lösung (14 % Fe), 6,6 g AlCl₃ x 6 H₂O und 111 g entmineralisiertem Wasser langsam zudosiert. Der pH-Wert wird mit 32 %iger Natronlauge konstant bei pH 2,6 gehalten. Nach Zugabe dieser Lösung wird der pH-Wert mit Salzsäure (18 % HCl) auf pH = 1,8 abgesenkt und bei diesem pH-Wert innerhalb von 300 Minuten 805 g einer mit konzentrierter Salzsäure stabilisierten SnCl₄-Lösung (2 Gew.-% SnCl₄) zudosiert. Danach wird der pH-Wert mit 32 %-iger Natronlauge auf 2,6 angehoben und 835 g einer Mischlösung von 306 g TiCl₄-Lösung (30 Gew.-% TiCl₄), 399 g FeCl₃-Lösung (14 % Fe), 11,8 g AlCl₃ x 6 H₂O und 224 g entmineralisiertem Wasser langsam zudosiert. Dabei wird der pH-Wert mit 32 %iger Natronlauge konstant gehalten. Anschließend wird der pH-Wert mit 32 %iger Natronlauge auf pH = 5,0 angehoben und 15 Minuten nachgerührt.
Das Pigment wird abfiltriert, mit entmineralisiertem Wasser gewaschen und 16 h bei 110 °C getrocknet. 15 g des Produktes werden bei 820 °C 30 Min. lang geglüht.
Man erhält ein leicht grünstichiges Goldpigment mit intensiver Farbe, hohem Deckvermögen und starkem Glanz.

### Beispiel 2: Al₂O₃-Plättchen + TiO₂/Fe₂O₃ + SnO₂ + TiO₂/Fe₂O₃)

100 g Al₂O₃-Plättchen der Teilchengröße 5-40 µm werden in 1,5 l entmineralisiertem Wasser auf 75 °C aufgeheizt. Nach Erreichen dieser Temperatur werden unter starkem Rühren 460 g einer Mischlösung von 167 g TiCl₄-Lösung (30 Gew.-% TiCl₄), 222 g FeCl₃-Lösung (14 % Fe), 6,6 g AlCl₃ x 6 H₂O und 101 g entmineralisiertem Wasser langsam zudosiert. Der pH-Wert wird mit 32 %iger Natronlauge konstant bei pH 2,6 gehalten. Nach Zugabe dieser Lösung wird der pH-Wert mit Salzsäure (18 % HCl) auf pH = 1,8 abgesenkt und bei diesem pH-Wert innerhalb von 300 Minuten 805 g einer mit konzentrierter Salzsäure stabilisierten SnCl₄-Lösung (2 Gew.-% SnCl₄) zudosiert. Danach wird der pH-Wert mit 32 %-iger Natronlauge auf 2,6 angehoben und 760 g einer Mischlösung von 306 g TiCl₄-Lösung (30 Gew.-% TiCl₄), 399 g FeCl₃-Lösung (14 % Fe), 11,8 g AlCl₃ x 6 H₂O und 224 g entmineralisiertem Wasser langsam zudosiert. Dabei wird der pH-Wert mit 32 %iger Natronlauge konstant gehalten. Anschließend wird der pH-Wert mit 32 %iger Natronlauge auf pH = 5,0 angehoben und 15 Minuten nachgerührt.
Das Pigment wird abfiltriert, mit entmineralisiertem Wasser gewaschen und 16 h bei 110 °C getrocknet. 15 g des Produktes werden bei 850 °C 30 Min. lang geglüht.
Man erhält ein stark grünstichiges Goldpigment mit intensiver Farbe, hohem Deckvermögen und starkem Glanz.

### Beispiel 3: Glasplättchen + SiO₂ + TiO₂/Fe₂O₃ + SnO₂ + TiO₂/Fe₂O₃)

150 g Calciumaluminiumborosilikat-Plättchen der Teilchengröße 20-200 µm werden in 1,5 l entmineralisiertem Wasser auf 75 °C aufgeheizt. Nach Erreichen dieser Temperatur wird der pH-Wert auf pH 9,0 eingestellt und unter starkem Rühren 110,8 g Na₂SiO₃-Lösung (13,75 % SiO₂) im Laufe von 50 Minuten zudosiert. Der pH wird dabei mit Salzsäure (18 % HCl) konstant gehalten. Danach wird der pH auf 2,6 abgesenkt und 250 g einer Mischung von 197 g FeCl₃-Lösung (14,2 % Fe), 148 g TiCl₄-Lösung (32 % TiCl₄) und 6,1 g AlCl₃-Lösung (29 % AlCl₃) im Laufe von 60 Minuten zudosiert. Anschließend wird der pH 1,8 abgesenkt und eine Mischung von 25,9 g SnCl₄-Lösung, 66 g Salzsäure (37 % HCl) und 500 g VE-Wasser im Laufe von 200 Min. zudosiert. Anschließend wird der pH wieder auf 2,6 angehoben und 285 ml einer Mischung von 197 g FeCl₃-Lösung (14,2 % Fe), 148 g TiCl₄-Lösung (32 % TiCl₄) und 6,1 g AlCl₃-Lösung (29 % AlCl₃) im Laufe von 350 Minuten zudosiert. Der pH-Wert wird jeweils mit Natronlauge (32 %) konstant gehalten. Anschließend wird der pH-Wert mit 32 %iger Natronlauge auf pH = 5,0 angehoben und 15 Minuten nachgerührt.
Das Pigment wird abfiltriert, mit entmineralisiertem Wasser gewaschen und 16 h bei 110 °C getrocknet. 15 g des Produktes werden bei 650 °C 30 Min. lang geglüht. Man erhält ein Goldpigment mit intensiver Farbe und starkem Glitzereffekt.

### Beispiel 4: SiO₂-Plättchen + TiO₂/Fe₂O₃ + SnO₂ + TiO₂/Fe₂O₃

100 g SiO₂-Plättchen der Teilchengröße 10-60 µm werden in 2 l entmineralisiertem Wasser auf 75 °C aufgeheizt. Nach Erreichen dieser Temperatur werden unter starkem Rühren 415 g einer Mischlösung von 178 g TiCl₄-Lösung (30 Gew.-% TiCl₄), 237 g FeCl₃-Lösung (14 % Fe), 7,0 g AlCl₃ x 6 H₂O und 117 g entmineralisiertem Wasser langsam zudosiert. Der pH-Wert wird mit 32 %iger Natronlauge konstant bei pH 2,6 gehalten. Nach Zugabe dieser Lösung wird der pH-Wert mit Salzsäure (18 % HCl) auf pH = 1,8 abgesenkt und bei diesem pH-Wert innerhalb von 300 Minuten 750 g einer mit konzentrierter Salzsäure stabilisierten SnCl₄-Lösung (2 w.-% SnCl₄) zudosiert. Danach wird der pH-Wert mit 32 %-iger Natronlauge auf 2,6 angehoben und 660 g einer Mischlösung von 218 g TiCl₄-Lösung (30 Gew.-% TiCl₄), 289 g FeCl₃-Lösung (14 % Fe), 8,6 g AlCl₃ x 6 H₂O und 145 g entmineralisiertem Wasser langsam zudosiert. Dabei wird der pH-Wert mit 32 %iger Natronlauge konstant gehalten. Anschließend wird der pH-Wert mit 32 %iger Natronlauge auf pH = 5,0 angehoben und 15 Minuten nachgerührt. Das Pigment wird abfiltriert, mit entmineralisiertem Wasser gewaschen und 16 h bei 110 °C getrocknet. 15 g des Produktes werden bei 850 °C 30 Min. lang geglüht.
Man erhält ein Goldpigment mit intensiver Farbe und starkem Glanz.

### Beispiel 5: (Glimmerplättchen + TiO₂ + TiO₂/Fe₂O₃ + SnO₂ + TiO₂/Fe₂O₃)

100 g Glimmerplättchen (Dicke: 100 - 500 nm, D₅₀ = 15 - 30 µm) werden in 1,5 l entmineralisiertem Wasser auf 75 °C aufgeheizt. Nach Erreichen dieser Temperatur wird der pH-Wert mit Salzsäure (18 % HCl) auf pH 2,2 eingestellt und unter starkem Rühren 22 g TiCl₄-Lösung (32 % TiCl₄) innerhalb von 20 Minuten zudosiert. Der pH wird dabei mit Salzsäure (18 % HCl) konstant gehalten. Danach wird der pH mit Natronlauge (32 % NaOH) auf 2,6 erhöht und 552 g einer Mischung von 236 g FeCl₃-Lösung (14,2 % Fe), 178 g TiCl₄-Lösung (32 % TiCl₄) und 7,3 g AlCl₃-Lösung (29 % AlCl₃) im Laufe von 250 Min. zudosiert. Anschließend wird der pH 1,8 abgesenkt und eine Mischung von 34,6 g SnCl₄-Lösung (50% SnCl₄), 90 g Salzsäure (37 % HCl) und 680 g VE-Wasser im Laufe von 200 Minuten zudosiert. Anschließend wird der pH mit Salzsäure (18 % HCl) wieder auf 2,6 angehoben und 342 ml einer Mischung von 236 g FeCl₃-Lösung (14,2 % Fe), 178 g TiCl₄-Lösung (32 % TiCl₄) und 7,3 g AlCl₃-Lösung (29 % AlCl₃) im Laufe von 160 Min. zudosiert. Der pH-Wert wird jeweils mit Natronlauge (32 %) konstant gehalten. Anschließend wird der pH-Wert mit 32 %iger Natronlauge auf pH = 5,0 angehoben und 15 Minuten nachgerührt.
Das Pigment wird abfiltriert, mit entmineralisiertem Wasser gewaschen und 16 h bei 110 °C getrocknet. 15 g des Produktes werden bei 820 °C 30 Min. lang geglüht. Man erhält ein Goldpigment mit intensiver Farbe und starkem Glitzereffekt.

### Vergleichsbeispiel:

### Analog Beispiel 1 der CN 101289580A) werden 100 g synthetischer Glimmer mit TiO₂ + Fe₂O₃/TiO₂ + SnO₂ + TiO₂ beschichtet.

100 g Fluorphlogopit-Plättchen der Teilchengröße 10-40 µm werden in 1,6 l entmineralisiertem Wasser auf 85 °C aufgeheizt. Nach Erreichen dieser Temperatur wird der pH-Wert mit Salzsäure (18 w.-% HCl) auf 2,3 abgesenkt und unter starkem Rühren 541,4 g einer 32%-igen TiCl₄-Lösung im Verlauf von 290 Min. zudosiert. Dabei wird der pH-Wert mit Natronlauge (20w.-%) konstant gehalten.
Anschließend wird der pH-Wert mit Natronlauge auf 4,0 angehoben und eine Mischung von 172 g FeCl₃-Lösung (14,2 % Fe) 34,9 g TiCl₄-Lösung (32 % TiCl₄) und 118 g VE-Wasser im Verlauf von 75 Min. zudosiert. Der pH-Wert wird mit 20 %iger Natronlauge konstant bei pH 4,0 gehalten. Anschließend wird der pH-Wert mit Salzsäure (18 % HCl) auf pH = 1,2 abgesenkt und dann mit Natronlauge (20 %) auf pH 1,5 angehoben. Bei diesem pH-Wert wird eine Lösung von 32,1 g SnCl₄ (50 w.-% SnCl₄) und 82,4 g Salzsäure (32 % HCl) in 622,4 g VE-Wasser im Laufe von 240 Minuten zudosiert. Danach wird der pH-Wert mit 32%-iger Natronlauge auf 2,3 angehoben und im Laufe von 300 Minuten 482 g TiCl₄-Lösung (32 % TiCl₄) zudosiert. Dabei wird der pH-Wert mit 32 %iger Natronlauge konstant gehalten. Anschließend wird der pH-Wert mit 32 %iger Natronlauge auf pH= 5 angehoben und 15 Minuten nachgerührt.
Das Produkt wird abfiltriert, mit VE-Wasser gewaschen und bei 110 °C 10 h lang getrocknet. 15 g des Produktes wird bei 820 °C 0,5 h geglüht. Man erhält ein bronzefarbenes Pulver.

### Farbmessungen:

In der nachfolgenden Tabelle werden die durch Farbmessung ermittelten Lab-Werte sowie die C*-Werte aufgeführt (CIE-L*a*b*-Normfarbwertsystem). Der C*-Wert ist ein direktes Maß für die Farbintensität. Die Messungen werden mit dem ETA-Photometer (Hersteller: STEAG ETA-OPTIK GmbH) durchgeführt.

**Tabelle 1:**

| Pigment | 75°/95° schwarzer Untergrund | | | Farbintensität |
|---|---|---|---|---|
| | L* | a* | b* | C* |
| Beispiel 1 | 142,9 | -2,0 | 117,0 | 117,0 |
| Beispiel 2 | 144,5 | -16,8 | 104,6 | 105,9 |
| Vergleichsbeispiel (CN 101289580 A) | 131,1 | 15,9 | 49,8 | 52,3 |

Die erfindungsgemäßen Pigmente gemäß der Beispiele 1 und 2 zeigen deutlich höhere C*-Werte im Vergleich zu dem Vergleichsbeispiel.

### Anwendungsbeispiele

### Beispiel A1: Autolack

Die Pigmentpulver lassen sich leicht in Autolacke einarbeiten. Dazu wird die Lackbasis unter Rühren mit dem Pigment versetzt. Der Rührvorgang wird fortgesetzt bis sich das Pigment gleichmäßig im Lack verteilt hat. Der eingefärbte Lack wird auf schwarz und weiß beschichtete Aluminiumprüfbleche aufgesprüht.

### Herstellung der Lackbleche:

Lack: Herberts Basislack 419982
Pigmentierung: 5 % des Pigments aus Beispiel 1
Trockenschichtdicke: 15 µm
Spritzpistole: Sprimag S 233, Düsendurchmesser 1,5 mm
Spritzdruck: 4 bar
Abstand Düse-Substrat: 27 cm

### Beispiel A2: Flexodruck

### Herstellung der Druckfarbe:

Das Mehrschichtpigment aus Beispiel 4 wird mit prewetting Byk 348 (0,6 %) vorbenetzt und in einer Konzentration von 22,9 % in das Bindemittel eingearbeitet.
Bindemittel: Koustom Kote 9000/ USA, wasserbasiert

Die Paste wird mit Wasser verdünnt bis eine Viskosität von 40 sec mit dem 4mm-Erichsen-Becher bei 25°C erreicht.

Die Pigmente werden von einem Anilox-Keramik-Zylinder (24 ccm/m²) über ein Lackplattenklischee auf matt-schwarzes Kunstdruckpapier gedruckt. Die erfindungsgemäßen Pigmente zeigen einen sehr starken Farb- und Glitzereffekt.

### Beispiel A3: Siebdruck

Die Pigmentkonzentration kann hier je nach gewünschtem Effekt stark variiert werden.
Als Bindemittel eignen sich sowohl wässrige als auch lösemittelhaltige Systeme. Für dem Tageslicht ausgesetzte Flächen empfiehlt sich der Zusatz eines UV-Schutzes, wie z.B. Benzotriazole oder HALS, um die Haltbarkeit der Beschichtung zu erhöhen.

Das Siebdruckgewebe wird nach Korngröße des eingesetzten Pigments ausgewählt. So hat sich z.B. für die Pigmentkorbfraktion von 5-40 µm eine Siebmaschenweite von 61-64 bewährt (Fäden/cm - Fadendurchmesser). Als Substrate kommt eine große Auswahl von Flächen in Frage - die wichtigsten Materialien sind Stoffe, Folien, Karton und Papiere bzw. Tapeten.

### Anwendungsbeispiel:

15 % Pigment aus Beispiel 1
"Binder": Pröll Aqua Jet FGL M 093: 85%
Siebgewebe 61-64
Ggf. Verdünnung mit Wasser
Laborversuch: 50- 150 g Farbe
Substrat: Luxo Satin 250g/m² (Herst. "Papyrus").

### Beispiel A4: Autolack

Die Pigmentpulver lassen sich leicht in Autolacke einarbeiten. Dazu wird die Lackbasis unter Rühren mit dem Pigment versetzt. Der Rührvorgang wird fortgesetzt bis sich das Pigment gleichmäßig im Lack verteilt hat. Der eingefärbte Lack wird auf schwarz und weiß beschichtete Aluminiumprüfbleche aufgesprüht.

### Herstellung der Lackbleche:

Lack: Herberts Basislack 419982
Pigmentierung: 5 % des Pigments aus Beispiel 5
Trockenschichtdicke: 15 µm
Spritzpistole: Sprimag S 233, Düsendurchmesser 1,5 mm
Spritzdruck: 4 bar
Abstand Düse-Substrat: 27 cm

## Patentansprüche

1. Interferenzpigmente auf der Basis von mehrfach beschichteten plättchenförmigen Substraten, **dadurch gekennzeichnet, dass** es sich bei den plättchenförmigen Substraten um natürlichen oder synthetischen Glimmer, Glas-, Al₂O₃-, SiO₂- oder TiO₂-Plättchen handelt und sie auf der Oberfläche des Substrats eine Schichtenfolge aus
(A0) optional einer hochbrechenden Beschichtung bestehend aus einer Schicht aus TiO₂,
(A) einer hochbrechenden Beschichtung bestehend aus einem Gemisch aus TiO₂ und Fe₂O₃, wobei das Mischungsverhältnis TiO₂ zu Fe₂O₃ 10:1 bis 1:3 beträgt, die gegebenenfalls mit ein oder mehreren weiteren Oxiden aus der Gruppe Al₂O₃, Ce₂O₃, B₂O₃, ZrO₂, SnO₂ dotiert sein kann,
(B) einer hochbrechenden Schicht bestehend aus SnO₂,
(C) einer hochbrechenden im sichtbaren Wellenlängenbereich absorbierende Beschichtung, wobei es sich bei der Beschichtung (C) um
- eine TiO₂-Schicht gefolgt von einer Fe₂O₃-Schicht, oder
- eine Fe₂O₃-Schicht, oder
- eine Schicht bestehend aus einem Gemisch aus TiO₂ und Fe₂O₃, oder
- eine TiO₂-Schicht gefolgt von einer Schicht aus Carminrot, oder
- eine TiO₂-Schicht gefolgt von einer Schicht aus Berliner Blau handelt,
und optional
(D) einer äußeren Schutzschicht
aufweisen.

2. Interferenzpigmente nach Anspruch 1, **dadurch gekennzeichnet, dass** es sich bei den plättchenförmigen Substraten um Glimmer-, Glas- oder Al₂O₃-Plättchen handelt.

3. Interferenzpigmente nach Anspruch 1 oder 2, **dadurch gekennzeichnet, dass** es sich bei den beschichteten plättchenförmigen Substraten um mit SiO₂ beschichtete Glasplättchen handelt.

4. Interferenzpigmente nach einem oder mehreren der Ansprüche 1 bis 3, **dadurch gekennzeichnet, dass** die Pigmente folgende Schichtenfolgen auf dem Substrat aufweisen:
Substrat + TiO₂ + TiO₂/Fe₂O₃ + SnO₂ + TiO₂/Fe₂O₃
Substrat + TiO₂ + TiO₂/Fe₂O₃ + SnO₂ + TiO₂ + TiO₂/Fe₂O₃
Substrat + TiO₂ + TiO₂/Fe₂O₃ + SnO₂ + TiO₂ + Fe₂O₃
Substrat + TiO₂ + TiO₂/Fe₂O₃ + SnO₂ + Fe₂O₃
Substrat + TiO₂ + TiO₂/Fe₂O₃ + SnO₂ + Fe₃O₄
Substrat + TiO₂ + TiO₂/Fe₂O₃ + SnO₂ + TiO₂ + Karminrot
Substrat + TiO₂ + TiO₂/Fe₂O₃ + SnO₂ + TiO₂ + Berliner Blau
Substrat + TiO₂/Fe₂O₃ + SnO₂ + TiO₂/Fe₂O₃
Substrat + TiO₂/Fe₂O₃ + SnO₂ + TiO₂ + TiO₂/Fe₂O₃
Substrat + TiO₂/Fe₂O₃ + SnO₂ + TiO₂ + Fe₂O₃
Substrat + TiO₂/Fe₂O₃ + SnO₂ + Fe₂O₃
Substrat + TiO₂/Fe₂O₃ + SnO₂ + Fe₃O₄
Substrat + TiO₂/Fe₂O₃ + SnO₂ + TiO₂ + Karminrot
Substrat + TiO₂/Fe₂O₃ + SnO₂ + TiO₂ + Berliner Blau.

5. Interferenzpigmente nach einem oder mehreren der Ansprüche 1 bis 4, **dadurch gekennzeichnet, dass** die Pigmente folgenden Aufbau besitzen:
synthetische Glimmerplättchen + TiO₂ + TiO₂/Fe₂O₃ + SnO₂ + TiO₂/Fe₂O₃
synthetische Glimmerplättchen + TiO₂ + TiO₂/Fe₂O₃ + SnO₂ + TiO₂ + TiO₂/Fe₂O₃
synthetische Glimmerplättchen + TiO₂ + TiO₂/Fe₂O₃ + SnO₂ + TiO₂ + Fe₂O₃
synthetische Glimmerplättchen + TiO₂ + TiO₂/Fe₂O₃ + SnO₂ + Fe₂O₃
synthetische Glimmerplättchen + TiO₂/Fe₂O₃ + SnO₂ + TiO₂/Fe₂O₃
synthetische Glimmerplättchen + TiO₂/Fe₂O₃ + SnO₂ + TiO₂ + TiO₂/Fe₂O₃
synthetische Glimmerplättchen + TiO₂/Fe₂O₃ + SnO₂ + TiO₂ + Fe₂O₃
synthetische Glimmerplättchen + TiO₂/Fe₂O₃ + SnO₂ + Fe₂O₃
Glasplättchen + TiO₂ + TiO₂/Fe₂O₃ + SnO₂ + TiO₂/Fe₂O₃
Glasplättchen + TiO₂ + TiO₂/Fe₂O₃ + SnO₂ + TiO₂ + TiO₂/Fe₂O₃
Glasplättchen + TiO₂ + TiO₂/Fe₂O₃ + SnO₂ + TiO₂ + Fe₂O₃
Glasplättchen + TiO₂ + TiO₂/Fe₂O₃ + SnO₂ + Fe₂O₃
Glasplättchen + TiO₂/Fe₂O₃ + SnO₂ + TiO₂/Fe₂O₃
Glasplättchen + TiO₂/Fe₂O₃ + SnO₂ + TiO₂ + TiO₂/Fe₂O₃
Glasplättchen + TiO₂/Fe₂O₃ + SnO₂ + TiO₂ + Fe₂O₃
Glasplättchen + TiO₂/Fe₂O₃ + SnO₂ + Fe₂O₃
Glasplättchen + SiO₂ + TiO₂ + TiO₂/Fe₂O₃ + SnO₂ + TiO₂/Fe₂O₃
Glasplättchen + SiO₂ + TiO₂ + TiO₂/Fe₂O₃ + SnO₂ + TiO₂ + TiO₂/Fe₂O₃
Glasplättchen + SiO₂ + TiO₂ + TiO₂/Fe₂O₃ + SnO₂ + TiO₂ + Fe₂O₃
Glasplättchen + SiO₂ + TiO₂ + TiO₂/Fe₂O₃ + SnO₂ + Fe₂O₃
Glasplättchen + SiO₂ + TiO₂/Fe₂O₃ + SnO₂ + TiO₂/Fe₂O₃
Glasplättchen + SiO₂ + TiO₂/Fe₂O₃ + SnO₂ + TiO₂ + TiO₂/Fe₂O₃
Glasplättchen + SiO₂ + TiO₂/Fe₂O₃ + SnO₂ + TiO₂ + Fe₂O₃
Glasplättchen + SiO₂ + TiO₂/Fe₂O₃ + SnO₂ + Fe₂O₃
Al₂O₃-Plättchen + TiO₂ + TiO₂/Fe₂O₃ + SnO₂ + TiO₂/Fe₂O₃
Al₂O₃-Plättchen + TiO₂ + TiO₂/Fe₂O₃ + SnO₂ + TiO₂ + TiO₂/Fe₂O₃
Al₂O₃-Plättchen + TiO₂ + TiO₂/Fe₂O₃ + SnO₂ + TiO₂ + Fe₂O₃
Al₂O₃-Plättchen + TiO₂ + TiO₂/Fe₂O₃ + SnO₂ + Fe₂O₃
Al₂O₃-Plättchen + TiO₂/Fe₂O₃ + SnO₂ + TiO₂/Fe₂O₃
Al₂O₃-Plättchen + TiO₂/Fe₂O₃ + SnO₂ + TiO₂ + TiO₂/Fe₂O₃
Al₂O₃-Plättchen + TiO₂/Fe₂O₃ + SnO₂ + TiO₂ + Fe₂O₃
Al₂O₃-Plättchen + TiO₂/Fe₂O₃ + SnO₂ + Fe₂O₃.
SiO₂-Plättchen + TiO₂ + TiO₂/Fe₂O₃ + SnO₂ + TiO₂ + TiO₂/Fe₂O₃
SiO₂-Plättchen + TiO₂ + TiO₂/Fe₂O₃ + SnO₂ + TiO₂ + Fe₂O₃
SiO₂-Plättchen + TiO₂ + TiO₂/Fe₂O₃ + SnO₂ + Fe₂O₃
SiO₂-Plättchen + TiO₂/Fe₂O₃ + SnO₂ + TiO₂/Fe₂O₃
SiO₂-Plättchen + TiO₂/Fe₂O₃ + SnO₂ + TiO₂ + TiO₂/Fe₂O₃
SiO₂-Plättchen + TiO₂/Fe₂O₃ + SnO₂ + TiO₂ + Fe₂O₃
SiO₂-Plättchen + TiO₂/Fe₂O₃ + SnO₂ + Fe₂O₃
natürliche Glimmerplättchen + TiO₂ + TiO₂/Fe₂O₃ + SnO₂ + TiO₂/Fe₂O₃
natürliche Glimmerplättchen + TiO₂ + TiO₂/Fe₂O₃ + SnO₂ + TiO₂ + TiO₂/Fe₂O₃
natürliche Glimmerplättchen + TiO₂ + TiO₂/Fe₂O₃ + SnO₂ + TiO₂ + Fe₂O₃
natürliche Glimmerplättchen + TiO₂ + TiO₂/Fe₂O₃ + SnO₂ + Fe₂O₃
natürliche Glimmerplättchen + TiO₂/Fe₂O₃ + SnO₂ + TiO₂/Fe₂O₃
natürliche Glimmerplättchen + TiO₂/Fe₂O₃ + SnO₂ + TiO₂ + TiO₂/Fe₂O₃
natürliche Glimmerplättchen + TiO₂/Fe₂O₃ + SnO₂ + TiO₂ + Fe₂O₃
natürliche Glimmerplättchen + TiO₂/Fe₂O₃ + SnO₂ + Fe₂O₃.

6. Interferenzpigmente nach einem oder mehreren der Ansprüche 1 bis 5, **dadurch gekennzeichnet, dass** die Interferenzpigmente zusätzlich eine äußere Schutzschicht (D) aufweisen.

7. Interferenzpigmente nach einem oder mehreren der Ansprüche 1 bis 6, **dadurch gekennzeichnet, dass** die Dicke aller Schichten (A0)-(C) auf dem Substrat ≤ 300 nm ist.

8. Verfahren zur Herstellung der Interferenzpigmente nach einem oder mehreren der Ansprüche 1 bis 7, **dadurch gekennzeichnet, dass** die Metalloxide nasschemisch durch hydrolytische Zersetzung von Metallsalzen im wässrigen Medium auf das plättchenförmige Substrat aufgebracht werden oder im Wirbelbettreaktor durch Gasphasenbeschichtung.

9. Verwendung der Interferenzpigmente nach einem oder mehreren der Ansprüche 1 bis 7 in Farben, Lacken, Industrielacken, Coil Coating, Autolacken, Autoreparaturlacken, Pulverlacken, Druckfarben, Sicherheitsdruckfarben, Kunststoffen, keramischen Materialien, kosmetischen Formulierungen, Gläsern, Papier, in Tonern für elektrophotographische Druckverfahren, im Saatgut, in Gewächshausfolien und Zeltplanen, als Absorber bei der Lasermarkierung von Papier und Kunststoffen, in kosmetischen Formulierungen, zur Herstellung von Pigmentanteigungen mit Wasser, organischen und/oder wässrigen Lösemitteln, zur Herstellung von Pigmentpräparationen und Trockenpräparaten, zur Masseeinfärbung von Lebensmitteln, zur Einfärbung von Überzügen von Lebensmittelprodukten und Pharmaerzeugnissen.

10. Formulierungen enthaltend ein oder mehrere Interferenzpigmente nach einem oder mehreren der Ansprüche 1 bis 7.

11. Pigmentpräparationen enthaltend ein oder mehrere Bindemittel und ein oder mehrere Interferenzpigmente nach einem oder mehreren der Ansprüche 1 bis 7.

12. Trockenpräparationen enthaltend Interferenzpigmente nach einem oder mehreren der Ansprüche 1 bis 7.

## Claims

1. Interference pigments based on multicoated flake-form substrates, **characterised in that** the flake-form substrates are natural or synthetic mica, glass flakes, Al₂O₃ flakes, SiO₂ flakes or TiO₂ flakes and they have on the surface of the substrate a layer sequence comprising
(A0) optionally a highly refractive coating consisting of a layer of TiO₂,
(A) a highly refractive coating consisting of a mixture of TiO₂ and Fe₂O₃, where the TiO₂ to Fe₂O₃ mixing ratio is 10:1 to 1:3, which may optionally be doped with one or more further oxides from the group Al₂O₃, Ce₂O₃, B₂O₃, ZrO₂, SnO₂,
(B) a highly refractive layer consisting of SnO₂,
(C) a highly refractive coating which absorbs in the visible wavelength region, where coating (C) is
- a TiO₂ layer followed by an Fe₂O₃ layer, or
- an Fe₂O₃ layer, or
- a layer consisting of a mixture of TiO₂ and Fe₂O₃, or
- a TiO₂ layer followed by a layer of Carmine Red, or
- a TiO₂ layer followed by a layer of Berlin Blue,
and optionally
(D) an outer protective layer.

2. Interference pigments according to Claim 1, **characterised in that** the flake-form substrates are mica flakes, glass flakes or Al₂O₃ flakes.

3. Interference pigments according to Claim 1 or 2, **characterised in that** the coated flake-form substrates are SiO₂-coated glass flakes.

4. Interference pigments according to one or more of Claims 1 to 3, **characterised in that** the pigments have the following layer sequences on the substrate:
substrate + TiO₂ + TiO₂/Fe₂O₃ + SnO₂ + TiO₂/Fe₂O₃
substrate + TiO₂ + TiO₂/Fe₂O₃ + SnO₂ + TiO₂ + TiO₂/Fe₂O₃
substrate + TiO₂ + TiO₂/Fe₂O₃ + SnO₂ + TiO₂ + Fe₂O₃
substrate + TiO₂ + TiO₂/Fe₂O₃ + SnO₂ + Fe₂O₃
substrate + TiO₂ + TiO₂/Fe₂O₃ + SnO₂ + Fe₃O₄
substrate + TiO₂ + TiO₂/Fe₂O₃ + SnO₂ + TiO₂ + Carmine Red
substrate + TiO₂ + TiO₂/Fe₂O₃ + SnO₂ + TiO₂ + Berlin Blue
substrate + TiO₂/Fe₂O₃ + SnO₂ + TiO₂/Fe₂O₃
substrate + TiO₂/Fe₂O₃ + SnO₂ + TiO₂ + TiO₂/Fe₂O₃
substrate + TiO₂/Fe₂O₃ + SnO₂ + TiO₂ + Fe₂O₃
substrate + TiO₂/Fe₂O₃ + SnO₂ + Fe₂O₃
substrate + TiO₂/Fe₂O₃ + SnO₂ + Fe₃O₄
substrate + TiO₂/Fe₂O₃ + SnO₂ + TiO₂ + Carmine Red
substrate + TiO₂/Fe₂O₃ + SnO₂ + TiO₂ + Berlin Blue.

5. Interference pigments according to one or more of Claims 1 to 4, **characterised in that** the pigments have the following structure:
synthetic mica flakes + TiO₂ + TiO₂/Fe₂O₃ + SnO₂ + TiO₂/Fe₂O₃
synthetic mica flakes + TiO₂ + TiO₂/Fe₂O₃ + SnO₂ + TiO₂ + TiO₂/Fe₂O₃
synthetic mica flakes + TiO₂ + TiO₂/Fe₂O₃ + SnO₂ + TiO₂ + Fe₂O₃
synthetic mica flakes + TiO₂ + TiO₂/Fe₂O₃ + SnO₂ + Fe₂O₃
synthetic mica flakes + TiO₂/Fe₂O₃ + SnO₂ + TiO₂/Fe₂O₃
synthetic mica flakes + TiO₂/Fe₂O₃ + SnO₂ + TiO₂ + TiO₂/Fe₂O₃
synthetic mica flakes + TiO₂/Fe₂O₃ + SnO₂ + TiO₂ + Fe₂O₃
synthetic mica flakes + TiO₂/Fe₂O₃ + SnO₂ + Fe₂O₃
glass flakes + TiO₂ + TiO₂/Fe₂O₃ + SnO₂ + TiO₂/Fe₂O₃
glass flakes + TiO₂ + TiO₂/Fe₂O₃ + SnO₂ + TiO₂ + TiO₂/Fe₂O₃
glass flakes + TiO₂ + TiO₂/Fe₂O₃ + SnO₂ + TiO₂ + Fe₂O₃
glass flakes + TiO₂ + TiO₂/Fe₂O₃ + SnO₂ + Fe₂O₃
glass flakes + TiO₂/Fe₂O₃ + SnO₂ + TiO₂/Fe₂O₃
glass flakes + TiO₂/Fe₂O₃ + SnO₂ + TiO₂ + TiO₂/Fe₂O₃
glass flakes + TiO₂/Fe₂O₃ + SnO₂ + TiO₂ + Fe₂O₃
glass flakes + TiO₂/Fe₂O₃ + SnO₂ + Fe₂O₃
glass flakes + SiO₂ + TiO₂ + TiO₂/Fe₂O₃ + SnO₂ + TiO₂/Fe₂O₃
glass flakes + SiO₂ + TiO₂ + TiO₂/Fe₂O₃ + SnO₂ + TiO₂ + TiO₂/Fe₂O₃
glass flakes + SiO₂ + TiO₂ + TiO₂/Fe₂O₃ + SnO₂ + TiO₂ + Fe₂O₃
glass flakes + SiO₂ + TiO₂ + TiO₂/Fe₂O₃ + SnO₂ + Fe₂O₃
glass flakes + SiO₂ + TiO₂/Fe₂O₃ + SnO₂ + TiO₂/Fe₂O₃
glass flakes + SiO₂ + TiO₂/Fe₂O₃ + SnO₂ + TiO₂ + TiO₂/Fe₂O₃
glass flakes + SiO₂ + TiO₂/Fe₂O₃ + SnO₂ + TiO₂ + Fe₂O₃
glass flakes + SiO₂ + TiO₂/Fe₂O₃ + SnO₂ + Fe₂O₃
Al₂O₃ flakes + TiO₂ + TiO₂/Fe₂O₃ + SnO₂ + TiO₂/Fe₂O₃
Al₂O₃ flakes + TiO₂ + TiO₂/Fe₂O₃ + SnO₂ + TiO₂ + TiO₂/Fe₂O₃
Al₂O₃ flakes + TiO₂ + TiO₂/Fe₂O₃ + SnO₂ + TiO₂ + Fe₂O₃
Al₂O₃ flakes + TiO₂ + TiO₂/Fe₂O₃ + SnO₂ + Fe₂O₃
Al₂O₃ flakes + TiO₂/Fe₂O₃ + SnO₂ + TiO₂/Fe₂O₃
Al₂O₃ flakes + TiO₂/Fe₂O₃ + SnO₂ + TiO₂ + TiO₂/Fe₂O₃
Al₂O₃ flakes + TiO₂/Fe₂O₃ + SnO₂ + TiO₂ + Fe₂O₃
Al₂O₃ flakes + TiO₂/Fe₂O₃ + SnO₂ + Fe₂O₃
SiO₂ flakes + TiO₂ + TiO₂/Fe₂O₃ + SnO₂ + TiO₂ + TiO₂/Fe₂O₃
SiO₂ flakes + TiO₂ + TiO₂/Fe₂O₃ + SnO₂ + TiO₂ + Fe₂O₃
SiO₂ flakes + TiO₂ + TiO₂/Fe₂O₃ + SnO₂ + Fe₂O₃
SiO₂ flakes + TiO₂/Fe₂O₃ + SnO₂ + TiO₂/Fe₂O₃
SiO₂ flakes + TiO₂/Fe₂O₃ + SnO₂ + TiO₂ + TiO₂/Fe₂O₃
SiO₂ flakes + TiO₂/Fe₂O₃ + SnO₂ + TiO₂ + Fe₂O₃
SiO₂ flakes + TiO₂/Fe₂O₃ + SnO₂ + Fe₂O₃
natural mica flakes + TiO₂ + TiO₂/Fe₂O₃ + SnO₂ + TiO₂/Fe₂O₃
natural mica flakes + TiO₂ + TiO₂/Fe₂O₃ + SnO₂ + TiO₂ + TiO₂/Fe₂O₃
natural mica flakes + TiO₂ + TiO₂/Fe₂O₃ + SnO₂ + TiO₂ + Fe₂O₃
natural mica flakes + TiO₂ + TiO₂/Fe₂O₃ + SnO₂ + Fe₂O₃
natural mica flakes + TiO₂/Fe₂O₃ + SnO₂ + TiO₂/Fe₂O₃
natural mica flakes + TiO₂/Fe₂O₃ + SnO₂ + TiO₂ + TiO₂/Fe₂O₃
natural mica flakes + TiO₂/Fe₂O₃ + SnO₂ + TiO₂ + Fe₂O₃
natural mica flakes + TiO₂/Fe₂O₃ + SnO₂ + Fe₂O₃.

6. Interference pigments according to one or more of Claims 1 to 5, **characterised in that** the interference pigments additionally have an outer protective layer (D).

7. Interference pigments according to one or more of Claims 1 to 6, **characterised in that** the thickness of all layers (A0)-(C) on the substrate is ≤ 300 nm.

8. Process for the preparation of the interference pigments according to one or more of Claims 1 to 7, **characterised in that** the metal oxides are applied to the flake-form substrate by wet-chemical methods by hydrolytic decomposition of metal salts in aqueous medium or by gas-phase coating in a fluidised-bed reactor.

9. Use of the interference pigments according to one or more of Claims 1 to 7 in paints, coatings, industrial coatings, coil coating, automobile paints, automotive refinish paints, powder coatings, printing inks, security printing inks, plastics, ceramic materials, cosmetic formulations, glasses, paper, in toners for electrophotographic printing processes, in seed, in greenhouse sheeting and tarpaulins, as absorbers in the laser marking of paper and plastics, in cosmetic formulations, for the preparation of pigment pastes with water, organic and/or aqueous solvents, for the preparation of pigment preparations and dry preparations, for the mass colouring of foods, for the colouring of coatings of food products and pharmaceutical products.

10. Formulations comprising one or more interference pigments according to one or more of Claims 1 to 7.

11. Pigment preparations comprising one or more binders and one or more interference pigments according to one or more of Claims 1 to 7.

12. Dry preparations comprising interference pigments according to one or more of Claims 1 to 7.

## Revendications

1. Pigments d'interférence basés sur des substrats sous forme de flocons multi-revêtus, **caractérisés en ce que** les substrats sous forme de flocons sont des flocons de mica naturel ou synthétique, des flocons de verre, des flocons d'Al₂O₃, des flocons de SiO₂ ou des flocons de TiO₂ et ils comportent, sur la surface du substrat, une séquence de couches qui comprend :
(A0) en option, un revêtement hautement réfractif qui est constitué par une couche de TiO₂ ;
(A) un revêtement hautement réfractif qui est constitué par un mélange de TiO₂ et de Fe₂O₃, où le rapport de mélange TiO₂ sur Fe₂O₃ est de 10:1 à 1:3, lequel revêtement peut, en option, être dopé avec un autre oxyde ou plusieurs autres oxydes qui est/sont pris parmi le groupe qui est constitué par l'Al₂O₃, le Ce₂O₃, le B₂O₃, le ZrO₂, le SnO₂ ;
(B) une couche hautement réfractive qui est constituée par du SnO₂;
(C) un revêtement hautement réfractif qui absorbe dans la région des longueurs d'onde visibles, où le revêtement (C) est
- une couche de TiO₂ suivie par une couche de Fe₂O₃ ; ou
- une couche de Fe₂O₃ ; ou
- une couche qui est constituée par un mélange de TiO₂ et de Fe₂O₃ ; ou
- une couche de TiO₂ suivie par une couche de rouge carminé ; ou
- une couche de TiO₂ qui est suivie par une couche de bleu Berlin ;
et, en option :
(D) une couche de protection externe.

2. Pigments d'interférence selon la revendication 1, **caractérisés en ce que** les substrats sous forme de flocons sont des flocons de mica, des flocons de verre ou des flocons d'Al₂O₃.

3. Pigments d'interférence selon la revendication 1 ou 2, **caractérisés en ce que** les substrats sous forme de flocons revêtus sont des flocons de verre revêtus de SiO₂.

4. Pigments d'interférence selon une ou plusieurs des revendications 1 à 3, **caractérisés en ce que** les pigments comportent les séquences de couches qui suivent sur le substrat :
substrat + TiO₂ + TiO₂/Fe₂O₃ + SnO₂ + TiO₂/Fe₂O₃
substrat + TiO₂ + TiO₂/Fe₂O₃ + SnO₂ + TiO₂ + TiO₂/Fe₂O₃
substrat + TiO₂ + TiO₂/Fe₂O₃ + SnO₂ + TiO₂ + Fe₂O₃
substrat + TiO₂ + TiO₂/Fe₂O₃ + SnO₂ + Fe₂O₃
substrat + TiO₂ + TiO₂/Fe₂O₃ + SnO₂ + Fe₃O₄
substrat + TiO₂ + TiO₂/Fe₂O₃ + SnO₂ + TiO₂ + rouge carmin
substrat + TiO₂ + TiO₂/Fe₂O₃ + SnO₂ + TiO₂ + bleu de Berlin
substrat + TiO₂/Fe₂O₃ + SnO₂ + TiO₂/Fe₂O₃
substrat + TiO₂/Fe₂O₃ + SnO₂ + TiO₂ + TiO₂/Fe₂O₃
substrat + TiO₂/Fe₂O₃ + SnO₂ + TiO₂ + Fe₂O₃
substrat + TiO₂/Fe₂O₃ + SnO₂ + Fe₂O₃
substrat + TiO₂/Fe₂O₃ + SnO₂ + Fe₃O₄
substrat + TiO₂/Fe₂O₃ + SnO₂ + TiO₂ + rouge carmin
substrat + TiO₂/Fe₂O₃ + SnO₂ + TiO₂ + bleu Berlin.

5. Pigments d'interférence selon une ou plusieurs des revendications 1 à 4, **caractérisés en ce que** les pigments présentent la structure qui suit :
flocons de mica synthétique + TiO₂ + TiO₂/Fe₂O₃ + SnO₂ + TiO₂/Fe₂O₃
flocons de mica synthétique + TiO₂ + TiO₂/Fe₂O₃ + SnO₂ + TiO₂ + TiO₂/Fe₂O₃
flocons de mica synthétique + TiO₂ + TiO₂/Fe₂O₃ + SnO₂ + TiO₂ + Fe₂O₃
flocons de mica synthétique + TiO₂ + TiO₂/Fe₂O₃ + SnO₂ + Fe₂O₃
flocons de mica synthétique + TiO₂/Fe₂O₃ + SnO₂ + TiO₂/Fe₂O₃
flocons de mica synthétique + TiO₂/Fe₂O₃ + SnO₂ + TiO₂ + TiO₂/Fe₂O₃
flocons de mica synthétique + TiO₂/Fe₂O₃ + SnO₂ + TiO₂ + Fe₂O₃
flocons de mica synthétique + TiO₂/Fe₂O₃ + SnO₂ + Fe₂O₃
flocons de verre + TiO₂ + TiO₂/Fe₂O₃ + SnO₂ + TiO₂/Fe₂O₃
flocons de verre + TiO₂ + TiO₂/Fe₂O₃ + SnO₂ + TiO₂ + TiO₂/Fe₂O₃
flocons de verre + TiO₂ + TiO₂/Fe₂O₃ + SnO₂ + TiO₂ + Fe₂O₃
flocons de verre + TiO₂ + TiO₂/Fe₂O₃ + SnO₂ + Fe₂O₃
flocons de verre + TiO₂/Fe₂O₃ + SnO₂ + TiO₂/Fe₂O₃
flocons de verre + TiO₂/Fe₂O₃ + SnO₂ + TiO₂ + TiO₂/Fe₂O₃
flocons de verre + TiO₂/Fe₂O₃ + SnO₂ + TiO₂ + Fe₂O₃
flocons de verre + TiO₂/Fe₂O₃ + SnO₂ + Fe₂O₃
flocons de verre + SiO₂ + TiO₂ + TiO₂/Fe₂O₃ + SnO₂ + TiO₂/Fe₂O₃
flocons de verre + SiO₂ + TiO₂ + TiO₂/Fe₂O₃ + SnO₂ + TiO₂ + TiO₂/Fe₂O₃
flocons de verre + SiO₂ + TiO₂ + TiO₂/Fe₂O₃ + SnO₂ + TiO₂ + Fe₂O₃
flocons de verre + SiO₂ + TiO₂ + TiO₂/Fe₂O₃ + SnO₂ + Fe₂O₃
flocons de verre + SiO₂ + TiO₂/Fe₂O₃ + SnO₂ + TiO₂/Fe₂O₃
flocons de verre + SiO₂ + TiO₂/Fe₂O₃ + SnO₂ + TiO₂ + TiO₂/Fe₂O₃
flocons de verre + SiO₂ + TiO₂/Fe₂O₃ + SnO₂ + TiO₂ + Fe₂O₃
flocons de verre + SiO₂ + TiO₂/Fe₂O₃ + SnO₂ + Fe₂O₃
flocons d'Al₂O₃ + TiO₂ + TiO₂/Fe₂O₃ + SnO₂ + TiO₂/Fe₂O₃
flocons d'Al₂O₃ + TiO₂ + TiO₂/Fe₂O₃ + SnO₂ + TiO₂ + TiO₂/Fe₂O₃
flocons d'Al₂O₃ + TiO₂ + TiO₂/Fe₂O₃ + SnO₂ + TiO₂ + Fe₂O₃
flocons d'Al₂O₃ + TiO₂ + TiO₂/Fe₂O₃ + SnO₂ + Fe₂O₃
flocons d'Al₂O₃ + TiO₂/Fe₂O₃ + SnO₂ + TiO₂/Fe₂O₃
flocons d'Al₂O₃ + TiO₂/Fe₂O₃ + SnO₂ + TiO₂ + TiO₂/Fe₂O₃
flocons d'Al₂O₃ + TiO₂/Fe₂O₃ + SnO₂ + TiO₂ + Fe₂O₃
flocons d'Al₂O₃ + TiO₂/Fe₂O₃ + SnO₂ + Fe₂O₃
flocons de SiO₂ + TiO₂ + TiO₂/Fe₂O₃ + SnO₂ + TiO₂ + TiO₂/Fe₂O₃
flocons de SiO₂ + TiO₂ + TiO₂/Fe₂O₃ + SnO₂ + TiO₂ + Fe₂O₃
flocons de SiO₂ + TiO₂ + TiO₂/Fe₂O₃ + SnO₂ + Fe₂O₃
flocons de SiO₂ + TiO₂/Fe₂O₃ + SnO₂ + TiO₂/Fe₂O₃
flocons de SiO₂ + TiO₂/Fe₂O₃ + SnO₂ + TiO₂ + TiO₂/Fe₂O₃
flocons de SiO₂ + TiO₂/Fe₂O₃ + SnO₂ + TiO₂ + Fe₂O₃
flocons de SiO₂ + TiO₂/Fe₂O₃ + SnO₂ + Fe₂O₃
flocons de mica naturel + TiO₂ + TiO₂/Fe₂O₃ + SnO₂ + TiO₂/Fe₂O₃
flocons de mica naturel + TiO₂ + TiO₂/Fe₂O₃ + SnO₂ + TiO₂ + TiO₂/Fe₂O₃
flocons de mica naturel + TiO₂ + TiO₂/Fe₂O₃ + SnO₂ + TiO₂ + Fe₂O₃
flocons de mica naturel + TiO₂ + TiO₂/Fe₂O₃ + SnO₂ + Fe₂O₃
flocons de mica naturel + TiO₂/Fe₂O₃ + SnO₂ + TiO₂/Fe₂O₃
flocons de mica naturel + TiO₂/Fe₂O₃ + SnO₂ + TiO₂ + TiO₂/Fe₂O₃
flocons de mica naturel + TiO₂/Fe₂O₃ + SnO₂ + TiO₂ + Fe₂O₃
flocons de mica naturel + TiO₂/Fe₂O₃ + SnO₂ + Fe₂O₃.

6. Pigments d'interférence selon une ou plusieurs des revendications 1 à 5, **caractérisés en ce que** les pigments d'interférence comportent de façon additionnelle une couche de protection externe (D).

7. Pigments d'interférence selon une ou plusieurs des revendications 1 à 6, **caractérisés en ce que** l'épaisseur de toutes les couches(A0)-(C) sur le substrat est ≤ 300 nm.

8. Procédé pour la préparation des pigments d'interférence selon une ou plusieurs des revendications 1 à 7, **caractérisé en ce que** les oxydes métalliques sont appliqués sur le substrat sous forme de flocons au moyen de procédés chimiques par voie humide par décomposition hydrolytique de sels de métaux dans un milieu aqueux ou au moyen d'un revêtement/dépôt en phase gazeuse dans un réacteur à lit fluidisé.

9. Utilisation des pigments d'interférence selon une ou plusieurs des revendications 1 à 7 dans les peintures, les revêtements, les revêtements industriels, le revêtement de bobines, les peintures pour automobiles, les peintures de retouche pour automobiles, les revêtements pulvérulents, les encres d'impression, les encres d'impression de sécurité, les matières plastiques, les matériaux de céramique, les formulations cosmétiques, les verres/les vitres, le papier, dans les to-ners pour les processus d'impression électrophotographique, au niveau de l'ensemencement, dans les feuilles et les bâches pour les serres, en tant qu'absorbeurs au niveau du marquage par laser du papier et des matières plastiques, dans les formulations cosmétiques, pour la préparation de pâtes pigmentaires avec de l'eau, des solvants organiques et/ou aqueux, pour la préparation de préparations de pigments et de préparations sèches, pour la coloration dans la masse des aliments, pour la coloration de revêtements de produits alimentaires et de produits pharmaceutiques.

10. Formulations comprenant un ou plusieurs pigment(s) d'interférence selon une ou plusieurs des revendications 1 à 7.

11. Préparations de pigments comprenant un ou plusieurs liant(s) et un ou plusieurs pigment(s) d'interférence selon une ou plusieurs des revendications 1 à 7.

12. Préparations sèches comprenant des pigments d'interférence selon une ou plusieurs des revendications 1 à 7.
